# EUROPEAN PATENT SPECIFICATION

(11) **EP 1 213 911 B1**
(45) Date of publication and mention of the grant of the patent: **03.09.2008**
(21) Application number: 01204412.9
(22) Date of filing: 19.11.2001
(51) Int. Cl.: H04N 1/32

(54) **Method and apparatus for reproducing an image with embedded cutting instructions and product thereof**
Verfahren und Vorrichtung zur Wiedergabe eines Bildes mit eingebetteten Schneidinstruktionen und Produkt davon
Procédé et appareil pour la reproduction d'une image avec des instructions de découpage et produit

(30) Priority: 29.11.2000 US 725660
(43) Date of publication of application: 12.06.2002
(73) Proprietor: Eastman Kodak Company, Rochester, New York 14650 (US)
(72) Inventor: Zeman, Robert E., Patent Legal Staff, Rochester, New York 14650-2201 (US)
(74) Representative: Haile, Helen Cynthia

(56) References cited:
- EP-A- 1 096 781
- US-A- 5 223 939
- US-A- 5 301 044
- US-A- 5 651 618
- US-A- 5 949 525

## Description

### BACKGROUND OF THE INVENTION

### 1. FIELD OF THE INVENTION

This invention relates to image reproduction and, more particularly, to a method and apparatus for embedding invisible cutting instructions within a pictorial image.

### 2. DESCRIPTION RELATIVE TO THE PRIOR ART

It is known that printed images, whether photographic or commercially made, are most efficiently generated in high-speed, high-capacity equipment. Such methodology necessitates ganging or packing in adjacent contact the images for reasons of efficient usage of the print material and processing time. Thereafter, the images must be separated by various cutting procedures, some of which are automated and many of which are manual. The automated cutting procedures typically require standardized output formats, and standardized input media width. Any variation from the standardized output formats typically requires human intervention. The commercial printing industry, with much more output format variability, relies heavily on slow and costly manual cutting procedures.

The high-speed production of photographic images by inkjet technology is a case in point. To achieve required productivity, a writing geometry abutting many output images is required, thereby avoiding time-costly printhead turnarounds. Furthermore, a strong desire to provide the increased service of output format flexibility, an advantaged capability of digital printing, can also require multi-formatted abutted images, which places new demands on the print finishing/cutting approach. Indeed, any digital printing system offers this new potential. A mismatch occurs, however, between a high-speed, format flexible digital printer and its attendant finishing/cutting subsystem, in that the cutting technology has typically required predictability, i.e., a lack of output format flexibility.

U.S. Patent No. 5,151,717, which issued in the name of Jamzadeh et al, discloses an electrostatic graphic image reproduction system. This system allows a variety of sizes of prints to be made utilizing a single large receiving sheet. The receiving sheet is large enough to receive one image of the largest size or an array of identical format smaller sized images. The receiving sheet of identical format smaller images is cut to size after image transfer.

U.S. Patent No. 5,586,479, which issued in the name of Roy et al, relates to a cutting apparatus which includes cutter sensors used to detect a lead edge of the image located on a receiver sheet. In response to the sensors the cutter and the lead edge of the image are aligned. The receiving sheet is transported in a direction essentially perpendicular to the cutter. The cutter cuts the receiving sheet adjacent and parallel to the lead and trail edges of the image. A third sensor detects edges of the image perpendicular to the cut lead edge of the image. A second cutter, responsive to the third sensor, cuts the receiving sheet adjacent edges of the image perpendicular to the cut lead edge of the image. In the Roy et al apparatus, appropriate cuts of an image may be made wherein the image is askew relative to the edges of the receiving sheet. However, in the Roy et al patent, the pictorial image is required to have highly distinct borders that can be detected by the sensors. Alternatively, Roy et al discloses that a special toner may be deposited at the distinct borders that can be detected by the sensors to determine the cutting locations.

U.S. Patent No. 5,631,747, which issued in the name of Farrell et al, relates to a printing system with an input system and control systems which link the input system with a print engine and causes image data, representative of an image, and trim marks to be superposed, in a selected manner, on an electronic page. The electronic page, with its attendant trim marks, is stored in a memory for reproduction thereof by the print engine. In printing of the electronic page, the trim marks are printed and are visible on the printed sheet.

U.S. Patent No. 6,050, 166, which issued in the name of Gauler et al, discloses a non-contact sheet measurement and cutting device for cutting material into sheets. In this device, an operator inputs the desired length of cut into a data acquisition computer and number of sheets to be cut. A camera sensor is moved to a predetermined location and when a lead edge of the material is sensed the cutter is actuated to cut the material to the desired length.

Other methods of delineating the cutting lines can be employed, but have drawbacks. For example, one might frame the edges of each image with a thin (e.g., 1 mm) border containing an unusual pattern (e.g., herring bone stripes). However, this approach has limited area for signal detection, takes additional space away from the image or print media, could be potentially confused with a similarly appearing image, and could leave a distracting visual edge if cutting were misregistered. Another method might be to place an invisible ink on the cutting edges as suggested by Roy et al, but this method requires additional materials, which the customer must resupply, requires registration at the time of printing, and is again subject to detection problems.

There is a need therefore for a method and apparatus for incorporating cutting instructions in printed images so that automated cutting may be enabled with format flexibility and without human intervention.

### SUMMARY OF THE INVENTION

In accordance with a first aspect of the invention, there is provided a method of printing an image according to claim 1, the method comprising providing digital image data representing a pictorial image to be printed on a sheet in hard copy form; providing instructions for cutting the sheet with the printed pictorial image thereon; and employing the digital image data and the instructions for cutting the sheet to print the pictorial image on the sheet with invisible cutting instructions being printed so as to be embedded in the printed pictorial image, the invisible cutting instructions being dispersed within the pictorial image and not necessarily located at locations where cutting is to be made according to the cutting instructions. The invention further includes printed images formed by said method.

In accordance with a second aspect of the invention there is provided a printed pictorial image according to claim 9.

In accordance with still further aspects of the invention, there are provided printed sheet formed in accordance with the described methods.

### BRIEF DESCRIPTION OF THE DRAWINGS

The above and other aspects of the invention will become apparent from the following description, the description being used to illustrate a preferred embodiment of the invention, when read in conjunction with the accompanying drawings.
Fig. 1 is a schematic view of a computer terminal that is operational in accordance with the apparatus and method of the invention;
Fig. 2 is a flowchart describing operation of the apparatus of Fig. 1;
Fig. 3 is a planar view of a cutting board that is used in accordance with the invention;
Fig. 4 is a side elevational view of the cutting board of Fig. 3 and a camera sensor supported so as to view the field of the cutting board;
Fig. 5 is a side elevational view in schematic form and illustrating telescoping and pivoting cutting arms that are connected to the cutting board;
Fig. 6 is a planar view of the cutting board illustrating operation of the telescoping arm with a pictorial image to be trimmed in accordance with the invention;
Fig. 7 is an illustration of the pictorial image and illustrates rectangular icons and crosshairs representing trim information that is embedded within the pictorial information in accordance with the invention;
Fig. 8a illustrates the cutting board with the telescoping arm supporting a sheet containing the pictorial image to be trimmed along a first edge;
Fig. 8b illustrates the cutting board with the telescoping arm supporting the sheet containing the pictorial image to be trimmed after rotation of 180 degrees for trimming along a second edge parallel to the first edge;
Fig. 8c illustrates the cutting board with the telescoping arm supporting the sheet containing the pictorial image to be trimmed along a third edge;
Fig. 8d illustrates the cutting board with the telescoping arm supporting the sheet containing the pictorial image to be trimmed along a fourth and last edge;
Figs. 9a, 10a and 11a illustrate the pictorial image having invisible embedded trim rectangular icons representing trim instructions for trimming the printed pictorial image at different respective locations illustrated respectively by the dotted lines shown respectively in Figs. 9b, 10b and 11b;
Fig.12 (comprised of sheets Figs.12A, 12B) is a flowchart describing operation of the method and apparatus of the invention;
Fig. 13 illustrate a group of pictorial images having respective embedded trim rectangular icons representing trim instructions for trimming the respective pictorial image of each, the group of pictorial images being arranged or associated for printing on a discrete receiver sheet of standard size, for example 8.5"x 11" or A4 or other known standard size;
Fig. 14 is a schematic representation of a group of pictorial images which have been efficiently packed into a page layout, some of the pictorial images being spaced from other images to allow trimming thereof with external borders;
Fig. 15 is a flowchart describing a process for forming a printed page having an efficiently packed page layout of a plurality of pictorial images each with embedded cutting information; and
Fig. 16 is a flowchart describing a process for trimming a printed page having a plurality of pictorial images with embedded cutting information.

### DESCRIPTION OF THE PREFERRED EMBODIMENTS

While the present invention will hereinafter be described in connection with a preferred embodiment thereof, it will be understood that it is not intended to limit the invention to that embodiment.

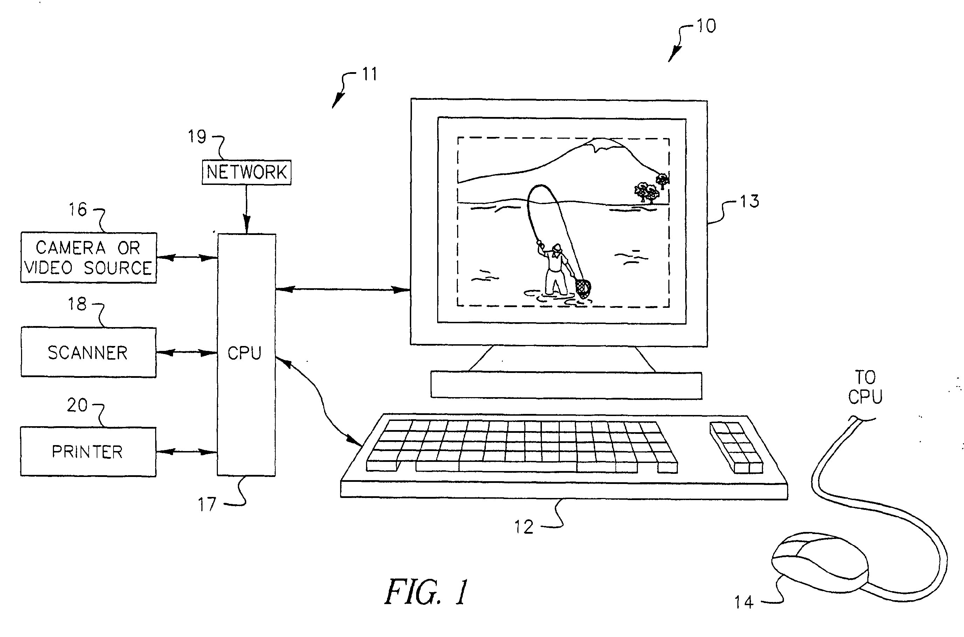

Referring to the drawings wherein like reference numbers designate identical or corresponding parts throughout the several views, and more particularly with reference now to Fig. 1 there is shown an exemplary image printing system 10 for processing print jobs in accordance with the teachings of the present invention. The printing system comprises a terminal in the form of a personal computer or computer workstation 11 that includes a keyboard 12, computer screen 13, mouse 14, central processing unit (CPU) 17, a camera or video source 16, a scanner 18 and printer 20. The CPU is programmed as will be described below to accept inputs of video information from the camera 16 or the scanner 18 and convert it to a visible display on computer screen 13. Alternatively, pictorial information in electronic form may be acquired through a network connection either as a LAN or Internet connection. The CPU is further programmed to allow an operator to input, using a mouse or the keyboard or through operation of a touch screen, if the computer screen is a touch screen, or through a digitizing tablet ( not shown), trimming information as indicated by the dotted lines surrounding the picture shown on the computer screen 13 in Fig. 1. Various programs currently commercially available provide for the scanning or other acquisition of a pictorial image for display on a computer screen in conjunction with trimming information that instructs the computer to which area of the image is to be trimmed. In the prior art, however, the electronic information representing the trimming information and the pictorial information are used to electronically trim the pictorial information and this trimmed pictorial electronic information is then sent to a printer.

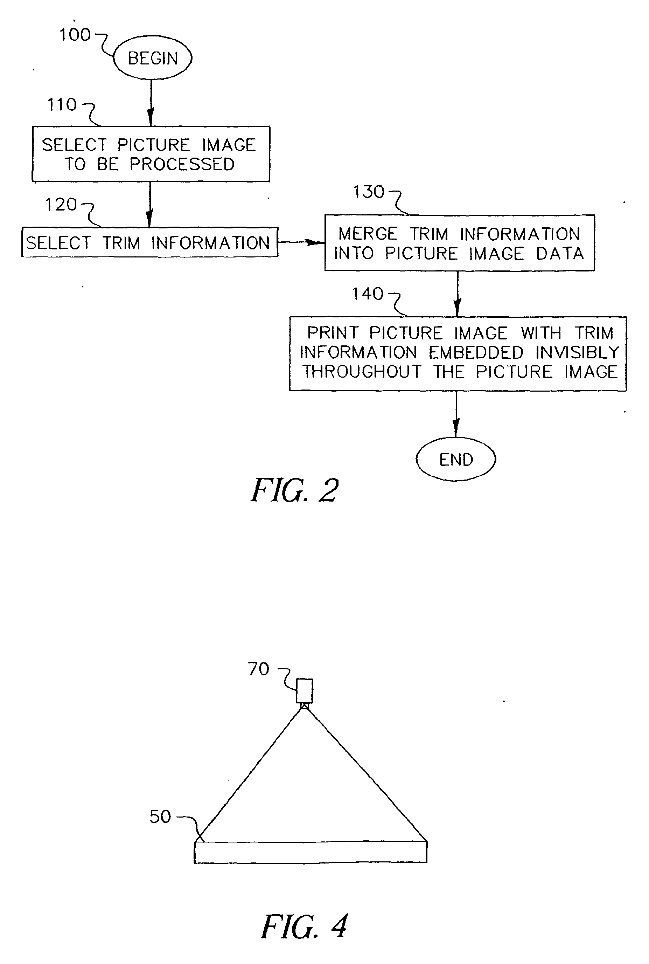

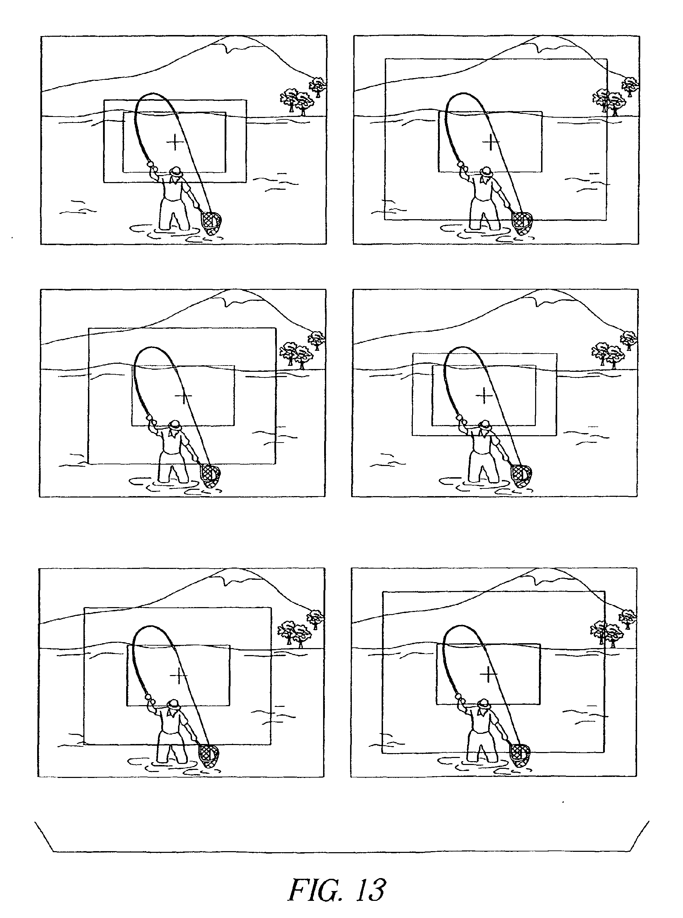

With reference now to Fig. 2, there is illustrated a flowchart which is illustrative of an operating program, programmed in the CPU for processing the pictorial image information and trim information in accordance with the invention. The program begins with step 100. In step 110, the operator selects the picture image to be processed. As noted above, information may come via the network or the camera or other video source or a scanner which scans a hard copy document containing the pictorial information. The CPU may be programmed, as is commercially now available, to accept plural images for recording on a single receiver sheet wherein the images may be assembled and viewed on the computer screen in conjunction with an outline of a receiver sheet upon which the plurality of images are to be printed see (Fig. 13). In such a case, the program provides for identifying trimming information with respect to each of the pictorial images that are to be processed on a single receiver sheet. With the trim information identified for each pictorial image, the program in the CPU thereupon merges electronically the trim information with the picture image data for that particular picture, step 130. It is preferred to perform this merging or embedding of cutting instructions and or print-size data in the printed image, using a phase dispersion methodology as described in U.S. Patent No. 5,859,920. It will be understood that other methodologies may be used, the importance being that there is embedding of the trimming instructions or print-size data information so that it will be printed with the pictorial information that will allow automatic format-flexible cutting which is independent of the printing engine that prints the information of the pictorial information with the trimming instructions. The cutting information is placed into the pictorial image data during the digital pre-processing of each print. In step 140, a command is sent to the printer to print the picture image with the trim information hidden in the picture image. It will be understood, of course, that the pictorial image data with the embedded trim instructions may be sent to a printer via the network 19 in lieu of a printer that is dedicated to the CPU or alternatively, stored on an electronic storage medium and processed on another computer for printing. The printer may be any printer of digital image information such as an ink jet, thermal, electrostatographic (using laser, LED or electrographic recording elements), etc.

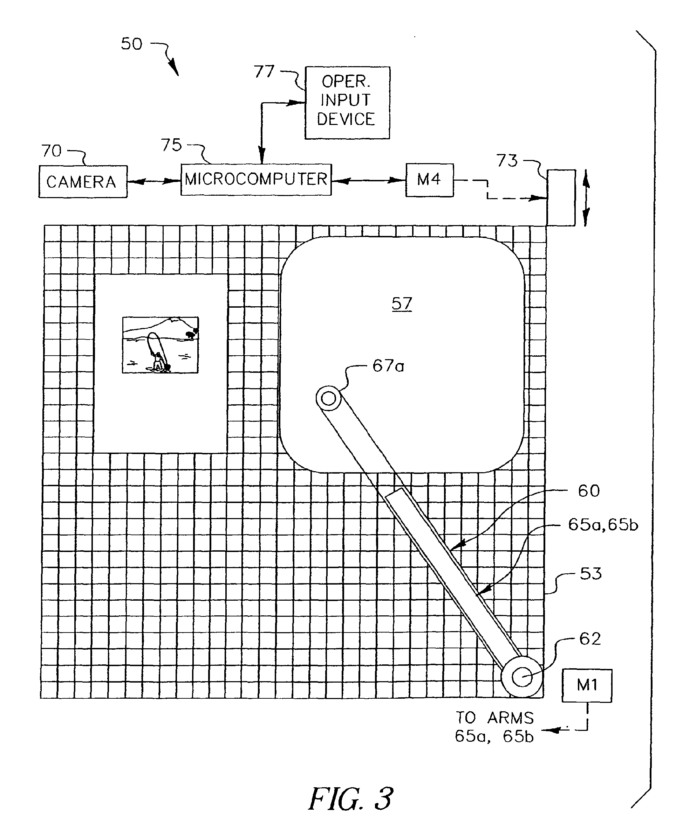

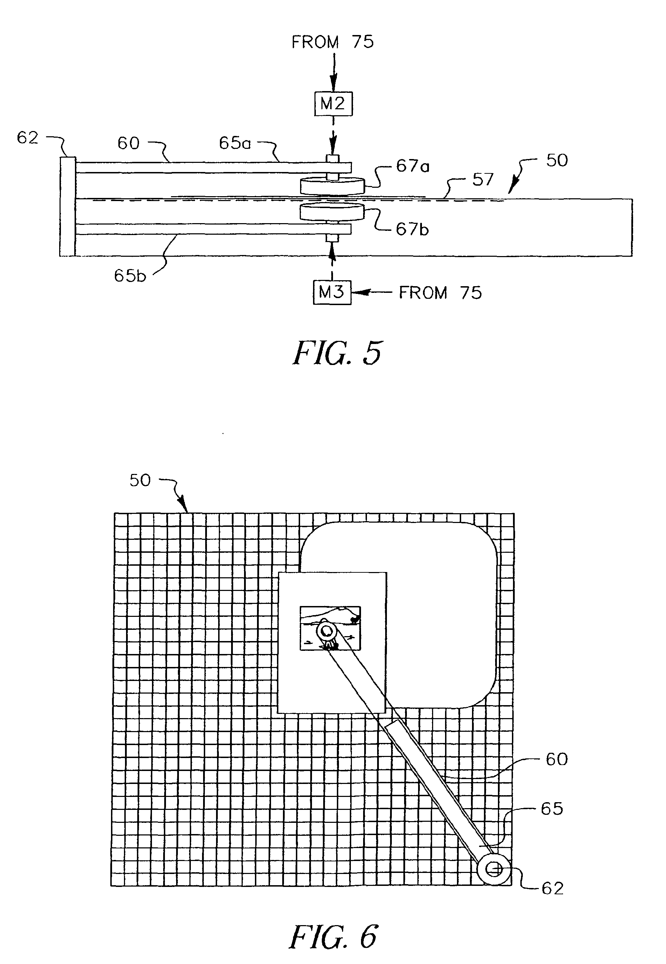

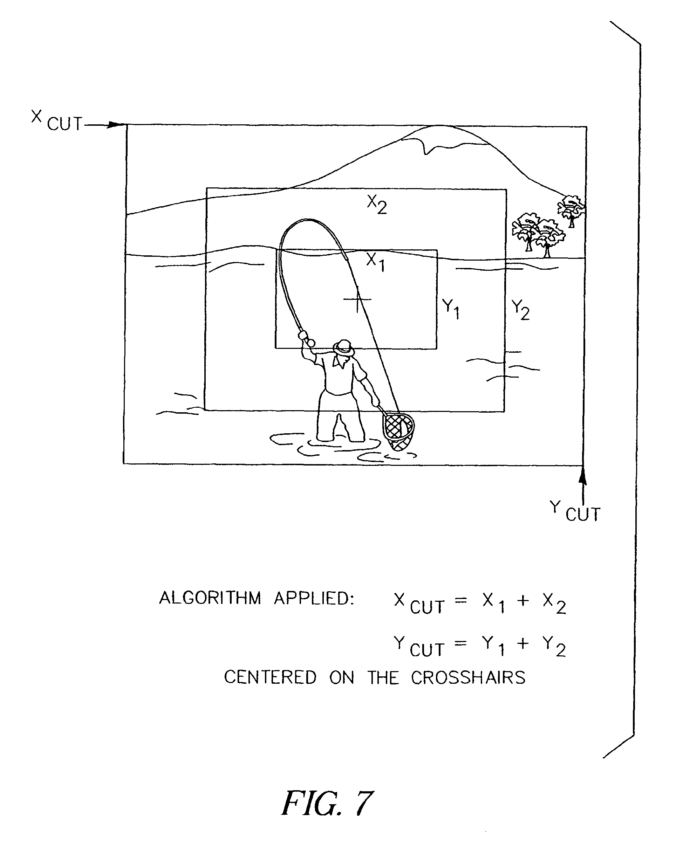

With reference to Figs. 3, 4 and 5, there is illustrated a cutting board 50 having a picture holding member 60 secured thereto for pivotal movement about a pivot 62. Telescoping arms 65a, 65b of the picture holding member have one ends thereof secured to the pivot 62. The second end of the telescoping arms has a pair of rotating heads 67a, 67b mounted thereon. The print produced by printer 20 is placed upon the cutting board 50. The cutting board may be for example a 15"x 15" board (" = inches) or 38cm x 38cm board. A digital camera 70 spaced from the cutting board is in position to view the field of the cutting board. The digital camera may be, for example, a monochrome solid state camera of 1000x 1000 elements (one megapixel). Within the camera sensor, then, the cutting board is essentially resolved into one million 0.015"x 0.015" (0.381mm x 0.381mm) cells. This defines the cutting resolution, or accuracy. By design, a certain column of pixels in the camera is aligned to and will fall on the cutting edge 53 of the board. The output of the camera 70 is input to a microcomputer 75 which is programmed to examine the pictorial image data sensed by the camera and to extract the trim instructions from the pictorial information. The operation of the cutting process may be an automatic one without operator intervention or one in which the operator does participate by having the output of the camera provided on a computer screen in which the embedded instructions for cutting are translated and then illustrated with the pictorial image to show the general nature of the border outline to be produced as a finish print. In response to an operator input such as from a mouse, keyboard or touch screen or other input device 77, to the microcomputer 75 a signal is provided by the microcomputer 75 to one or more motors M1 to control movement of the telescoping and pivoting arms 65a, 65b. The motor M1 or multiple motors have suitable mechanical connections to the arms 65a, 65b to control pivoting and telescoping of the arms. The cutting board 50 also includes an area thereof adjacent the cutting edge that comprises a flexible membrane 57. The pivoting and telescoping arms 65a, 65b are supported respectively above and below the surface of the cutting board so as to support the rotating heads 67a, 67b so that the upper rotating head 67a may have direct contact with the paper upon which the picture image is formed and the bottom rotating head 67b engages the bottom surface of the flexible membrane 57 so as to effectively clamp the paper in position when it is supported on the flexible membrane 57 for cutting. Initially, the paper is placed on the flexible membrane (see Fig. 6) and the arms 65a, 65b are preferably positioned outside the field of view of the membrane to allow the camera to view the pictorial information on the paper without any obscuring of the pictorial image by the arms. In this part of the process, the trim information is extracted from the pictorial information sensed by the camera using the phase dispersion algorithm described in the patent noted above and a determination is made of location of the center of the pictorial information and its being associated with a specific pixel location, which bears a known distance to the cutting edge (with each pixel representing 0.015" in this case) thus, for example, if the center falls on, for example, column 600, and the cutting edge 53 is known to be, for example, column 950 the center of the image would be (950-600)x 0.015= 5.25" from the cutting edge. Motor M1 is then enabled by signals from the microcomputer 75 to cause the telescoping arms 65a, 65b to move the rotating heads over the center of the pictorial image whereupon it is locked onto the image. This movement of the telescoping arm involves both radial movement of the telescoping arms as well as pivoting movement about the pivot point 62. Each of the rotating heads 67a, 67b is coupled with a motor M2,M3 that is adapted to rotate the rotating heads in response to signals from the microcomputer 75. In lieu of separate motors, a gearing arrangement may be provided that drives both rotating heads from a single motor. The purpose of this rotation is to correct for angular misorientation of the pictorial image which is determined as follows. For example, misorientation can be resolved dynamically by adjusting angle until the rectangle icons fall on the minimum number of camera rows and columns. With reference to Fig. 7, the trim information embedded within the image takes the form of an identification of the center of the pictorial image indicated in the figure by a cross-hair, and rectangular icons defined by lines x1,y1 and x2,y2 which are determined as relative spacings from the cross-hair. In accordance with one exemplary algorithm as indicated in Fig. 7 assume it was initially desired to trim the pictorial image at the respective edges of the image. This is the trim information provided by the operator making the selections described with reference to the operation described with reference to Fig. 1. The x cut and y cut information can be calculated by respectively adding the values of the respective abscissa, ordinate information. Thus, x-cut= x1 + x2 and y-cut=y1+y2.

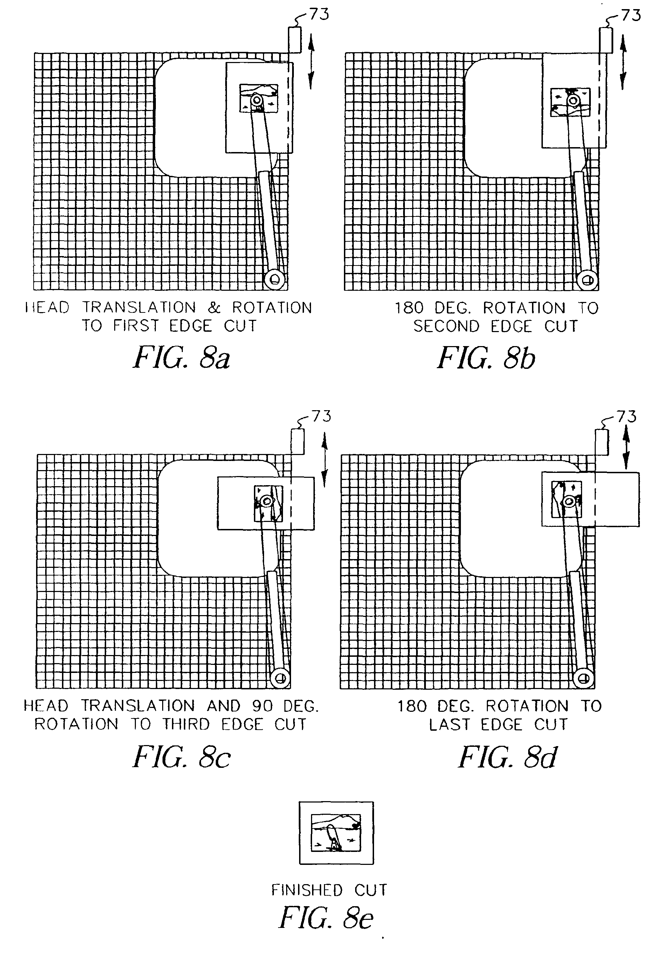

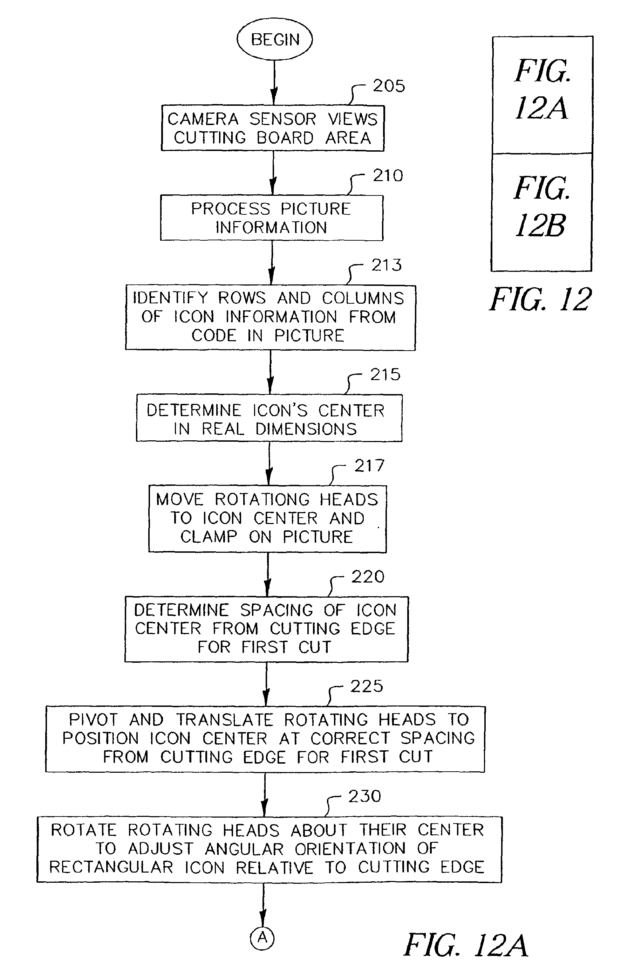

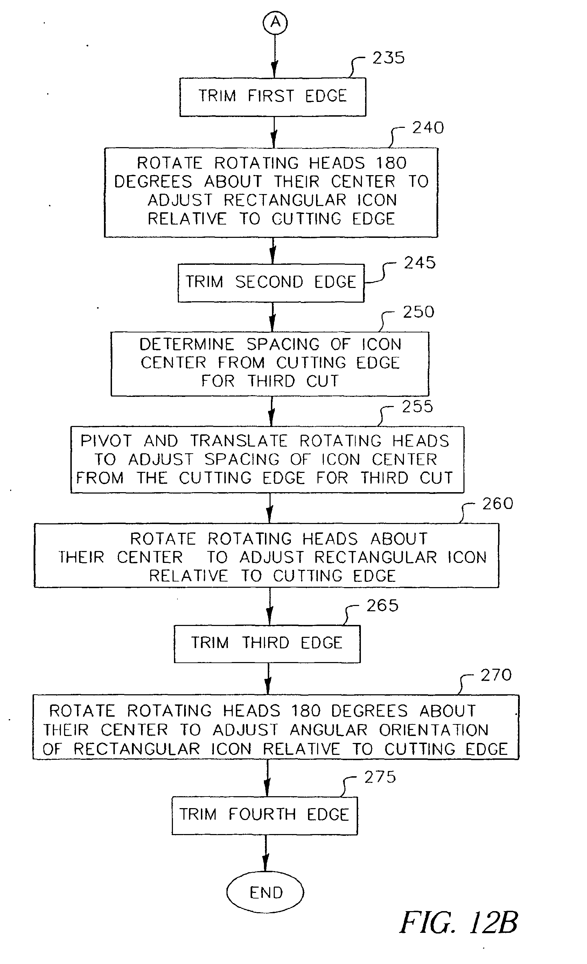

With reference to Figs. 8a,b, c and d and the flowchart of Fig. 12, the sheet with the pictorial information is sensed by the camera sensor (step 205) and the picture information is processed (step 210). Rows and columns of icon information from coded information in the picture are identified (step 213). The icon's center is determined in real dimensions (step 215) . The rotating heads are moved to the icon center and the picture is clamped by the rotating heads at the center of the pictorial image (step 217). The spacing of the icon center from the cutting edge for the first cut is determined (step 220). The telescoping arms are then pivoted and translated to position the icon center at the correct spacing from the cutting edge for the first cut (step 225). The rotating heads are then rotated about their center to adjust the angular orientation of the rectangular icons to have parallelism with the cutting edge of the cutting board (step 230). The paper sheet is now in position such that the edge to be first cut is positioned properly over the cutting edge 53 of the cutting board. A trimmer blade 73 that is coupled to a motor M4 moves along the cutting edge to trim the paper sheet as shown in Fig. 8a (step 235). The motor M4 is connected to the microcomputer 75 to receive driving signals from the microcomputer. After the first cut is made the rotating heads 67a, 67b are respectively rotated to cause rotation of 180 degrees of the sheet so that a second edge of the sheet is in position to receive the second edge cut as indicated in Fig. 8b (step 240) Once again, the trimmer blade 73 is activated by motor M4 in response to signals from microcomputer 75 to cause the trimmer blade 73 to advance along the cutting edge 53 and trim the second edge of the paper sheet (step 245). Subsequent to making the second edge cut, a determination is made of the spacing of the icon center from the cutting edge for making of the third cut (step 250). Thereafter, the radial position and angular position of the rotating heads are adjusted by adjusting the position of the rotating heads relative to the pivot 62 and by pivoting the telescoping arms 65a, 65b (step 255). With the icon center position at the appropriate spacing from the cutting edge, the rotating heads rotate about their centers to rotate the paper sheet through a 90 degree rotation to position a third edge cut location of the paper sheet in position for cutting (step 260). The trimmer blade is then actuated again to form the third edge of the finished picture (step 265). After making this third cut, the rotating heads rotate 180 degrees to position the fourth and last edge to be cut in position at the cutting edge 53 (step 270). The trimmer blade 73 is then actuated to make the fourth and last cut (step 275). The pictorial image with the border as trimmed according to the requested instructions, i.e. the finished cut is illustrated in Fig. 8e. It will be noted that an advantage of processing the cutting of the edges so that the opposite edges are cut in succession is that there is a reduced number of translations and rotations (pivoting relative to pivot 62) of the rotating heads. Thus in going from the position shown in Fig. 8a to that shown in Fig. 8b, there is only a need to rotate the rotating heads about their own centers, similarly in going from the positioning in Fig. 8c to 8d there is a similar need to only rotate the rotating heads about their own centers.

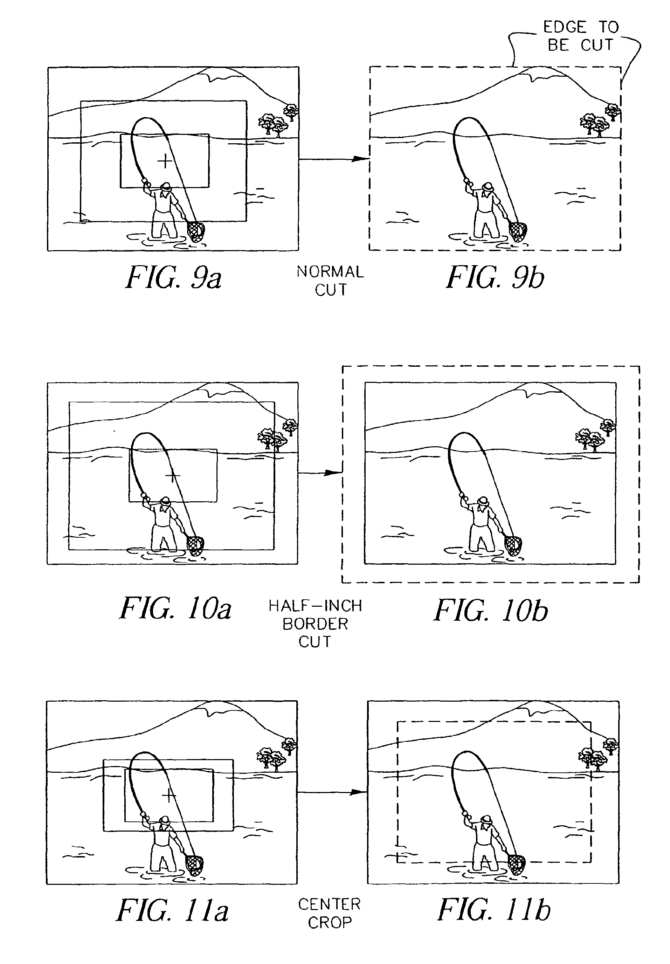

In Fig. 9a, there is illustrated the pictorial image with the embedded rectangular icons being visible for purposes of description of the invention. The dimensions of the rectangular icons and their respective positions from the center of the pictorial image and the algorithm used is such as to determine the edges to be cut which are illustrated in Fig. 9b. In this example, the trim edges coincide with the edges of the pictorial image (normal cut). It will be noted, however, in accordance with the invention that while the edges to be cut coincide with the edges of the pictorial image, that the information representing the identification or location of the edges to be cut are well within the edges of the pictorial image and indeed are distributed as information throughout the image. While the trim information is illustrated as icon rectangles, the information representing such rectangles is distributed throughout the picture and not just at the locations identified as the rectangles.

With reference now to Fig. 10a, there is illustrated another example of the pictorial image with the embedded but illustrated rectangular icons. In accordance with the algorithm used and their respective positions from the center of the pictorial image the rectangular icons define trim locations outside of the pictorial image as illustrated in Fig. 10b (half-inch border cut).

With reference now to Fig. 11a, there is illustrated still another example of the pictorial image with the embedded but illustrated rectangular icons. In accordance with the algorithm used and their respective positions from the center of the pictorial image, the rectangular icons define trim locations within the pictorial image as illustrated in Fig. 11b (center crop).

Thus, in accordance with the invention the embedded instructions, even though invisible to the operator and distributed through the pictorial image, can define trim locations either at the pictorial edge, inside of the pictorial edge or outside of the pictorial edge for each pictorial image including images where plural images are to be printed on a single receiver sheet.

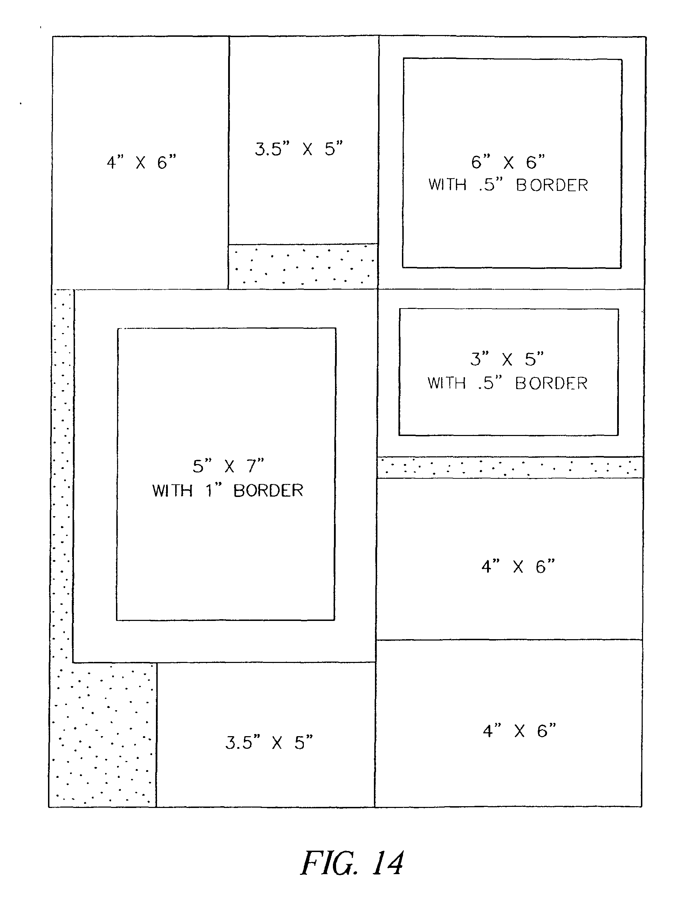

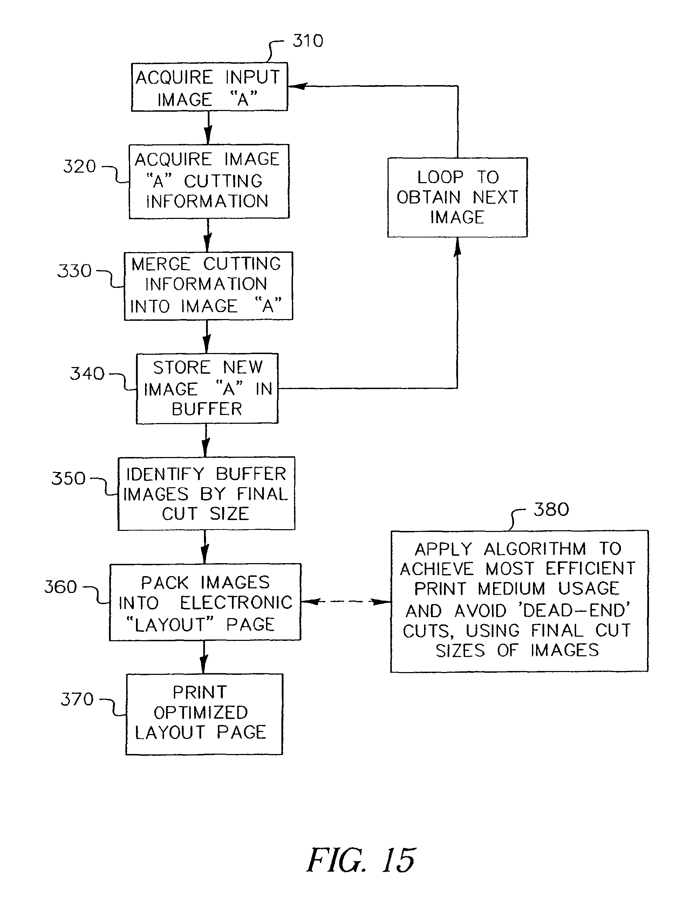

As noted above with reference to Fig. 13, image information representing a plurality of pictorial images may be assembled in a page buffer for printing on a standard size sheet and then printed. In Fig. 14, there is illustrated the schematic of a plurality of pictorial images of different dimensions that are assembled and printed so as to pack the images efficiently however leaving room between the images for trimming of external borders. The borders shown in Fig. 14 may not necessarily reflect the exact border since space must be allocated between images due to inaccuracies in the cutter. With reference to Fig. 15 in order to produce a print having plural images on a printed sheet in step 310, the operator that forms the prints acquires a first input image. Cutting information relative to the first image is then also input by the operator as described hereinabove, step 320. The cutting information is then merged into this image as herein above described also, step 330. The pictorial information with the merged cutting information is stored in an image buffer, step 340. The process then loops to repeat for each of the plural images that are to be assembled on a printed page of standard size. Each of the images stored in the buffer are identified by final cut size, step 350. In step 360 the images are packed into electronic layout page which may be done through an iterative process used by a computer to assemble the various images electronically so that they fit efficiently onto the selected printed page. In assembling the various images, there may be provided for rotation of the images electronically to assure that all the desired images can be assembled on the same page, step 380. The most efficient print media usage is determined by the computer using final cut sizes of images and avoiding ' dead-end' cuts, and so the optimized print layout is provided, step 370. The print with the plurality of pictorial images each having invisible embedded trim instructions may then be printed.

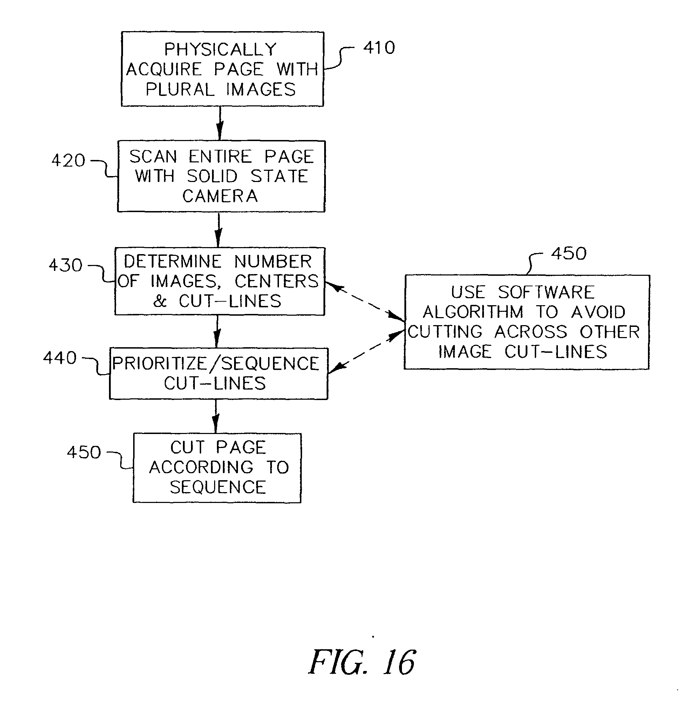

With reference now to the flowchart of Fig. 16, the cutting of a sheet containing plural pictorial images may be provided by placing the sheet on the cutting board 50, step 410. The camera 70 scans the entire page, step 420. The computer 75 is programmed to determine the number of the images on the page, and the locations of the centers and cut-lines. This determination is made by analyzing the image information of each pictorial image and interpreting the embedded information for the information relative to centers and cut-lines, step 430. The computer then makes a determination of the order for cutting of the pictorial images from the sheet. In an ordinary case where the images are presented in plural vertical columns, the selection may comprise having an order where images along one column are cut out before beginning a next column of images. In considering cut-lines, the embedded information relative to borders are considered and it is assumed that placement is such that there is no cutting across other image cut-lines. In determining a cut-line, the computer program may determine whether such cutting through other image cut-lines can be avoided, step 450. After determining the order of the images to cut and that such cutting can be made without cutting across other image cut-lines, the computer operates the cutter to commence cutting of the page according to the determined sequence, step 450. Each of the images may be cut in accordance with the description above relative to cutting of one image.

Although the invention has been illustrated with the production of prints of rectangular configuration, invention is not so limited. For example, the embedded instructions may represent the outline of a non-regular or curved line that is to form the path of the cut outline. A suitable cutter such as a scroll saw or point cutter or laser cutter may be used as the cutting device.

The invention has been illustrated with the embedding of information representing rectangles that defines information for calculating a border or cut outline. The embedded invisible information could instead be other types of information such as a bar code or other representation that can be sensed by the camera sensor and interpreted to define certain picture outline formats represented by the information assigned for that bar code. The material upon which the images are formed and then cut may be paper, cardboard, photographic paper or film, metal or other materials upon which images are printed.

## Claims

1. A method of printing an image comprising:
providing digital image data representing a pictorial image to be printed on a sheet in hard copy form;
providing instructions for cutting the sheet with the printed pictorial image; and
employing the digital image data and the instructions for cutting the sheet to print the pictorial image on the sheet with invisible cutting instructions being printed so as to be embedded in the printed pictorial image, the invisible cutting instructions being dispersed within the pictorial image and not necessarily located at locations where cutting is to be made according to the cutting instructions.

2. The method of claim 1 wherein the instructions for cutting is placed into digital form that is merged with processed digital image data representing the pictorial image to be printed.

3. The method of claims 1 or 2 wherein the instructions for cutting represents data that defines a center of the pictorial mage and a representation of a geometric figure or figures that provide information relative to the locations of cutting points.

4. The method of claim 3 wherein the representation of the geometric figures virtually falls within the pictorial image but defines locations of cutting points external to the pictorial image.

5. The method of any of claims 1, 2, 3, or 4 and including sensing the embedded invisible cutting instructions and automatically positioning the pictorial image relative to a cutting mechanism and cutting the sheet in accordance with the cutting instructions.

6. The method of claim 4 and including performing a calculation relative to virtual displacements of points on the geometric figure from the center of the image and using that calculation to determine cutting locations outside of the pictorial image and cutting the sheet in accordance with the determined cutting locations.

7. The method of any of claims 1 through 4 and including method :
forming a pictorial image having a visible border on a sheet in hard copy form; and
forming invisible cutting information within the pictorial image, the cutting information being present inward of the border of the pictorial image and the cutting information representing information for cutting the sheet at locations outward of the border.

8. The method of claim 1 or 7 and wherein plural pictorial images are formed on the sheet in hard copy form and at least some of the plural of the pictorial images each include invisible cutting information formed within a respective pictorial image.

9. A printed pictorial image formed on a sheet printed from digital image data and including cutting information, the printed image comprising:
embedded instructions distributed through the pictorial image that are invisible to an operator, the embedded instructions defining trim locations at a pictorial edge, inside of the pictorial edge, or outside of the pictorial edge for each pictorial image including images where plural images are to be printed on a single receiver sheet.

## Patentansprüche

1. Verfahren zum Drucken eines Bildes, mit den Schritten:
Bereitstellen digitaler Bilddaten, die eine auf ein Blatt in Form eines Ausdrucks zu druckende bildliche Aufnahme darstellen;
Bereitstellen von Befehlen zum Schneiden des Blattes mit der gedruckten bildlichen Aufnahme; und
Verwenden der digitalen Bilddaten und der Befehle zum Schneiden des Blattes, um die bildliche Aufnahme auf dem Blatt mit unsichtbaren Schneidebefehlen derart zu bedrucken, dass sie in der zu druckenden bildlichen Aufnahme eingebettet sind, wobei die unsichtbaren Schneidebefehle in der bildlichen Aufnahme verteilt und nicht notwendigerweise an Orten angeordnet sind, an denen der Schnitt gemäß den Schneidebefehlen erfolgen soll.

2. Verfahren nach Anspruch 1, worin die Schneidebefehle in digitaler Form vorliegen und sich mit bearbeiteten digitalen Bilddaten mischen, welche die zu druckende bildliche Aufnahme darstellen.

3. Verfahren nach Anspruch 1 oder 2, worin die Schneidebefehle Daten darstellen, die einen Mittelpunkt der bildlichen Aufnahme und eine Darstellung einer geometrischen Figur oder geometrischer Figuren bilden, die Informationen bezüglich der Orte von Schneidepunkten liefern.

4. Verfahren nach Anspruch 3, worin die Darstellung der geometrischen Figuren virtuell in der bildliche Aufnahme liegt, jedoch Orte von Schneidepunkten bildet, die außerhalb der bildlichen Aufnahme liegen.

5. Verfahren nach einem der Ansprüche 1, 2, 3 oder 4, mit den Schritten: Abtasten der eingebetteten unsichtbaren Scheidebefehle und automatisches Positionieren der bildlichen Aufnahme bezüglich einer Schneidevorrichtung und Schneiden des Blattes gemäß den Schneidebefehlen.

6. Verfahren nach Anspruch 4, mit den Schritten: Ausführen einer Berechnung bezüglich einer virtuellen Verschiebung von Punkten auf der geometrischen Figur vom Mittelpunkt der Aufnahme aus, Verwenden der Berechnung zum Bestimmen von Schneidepunkten außerhalb der bildlichen Aufnahme und Schneiden des Blattes gemäß den vorgegebenen Schneidepunkten.

7. Verfahren nach einem der Ansprüche 1 bis 4, mit den Schritten:
Erzeugen einer bildlichen Aufnahme mit einem sichtbaren Rand auf einem Blatt in Form eines Ausdrucks; und
Erzeugen unsichtbarer Schneideinformationen innerhalb der bildlichen Aufnahme, wobei die Schneideinformationen innerhalb des Randes der bildlichen Aufnahme vorhanden sind und wobei die Schneideinformationen Informationen zum Schneiden des Blattes an Orten außerhalb des Randes darstellen.

8. Verfahren nach Anspruch 1 oder 7, worin eine Vielzahl bildlicher Aufnahmen auf dem Blatt in Form eines Ausdrucks ausgebildet ist und mindestens einige aus der Vielzahl bildlicher Aufnahmen jeweils unsichtbare Schneideinformationen enthalten, die innerhalb einer entsprechenden bildlichen Aufnahme vorhanden sind.

9. Gedruckte bildliche Aufnahme, die auf einem Blatt ausgebildet ist, das anhand digitaler Bilddaten gedruckt wird und Schneideinformationen enthält, mit:
eingebetteten Befehlen, die auf der bildlichen Aufnahme verteilt und für eine Bedienungsperson unsichtbar sind, wobei die eingebetteten Befehle Schneideorte an einem Bildrand, innerhalb des Bildrandes oder außerhalb des Bildrandes für jede bildliche Aufnahme darstellen, einschließlich Bilder, bei denen eine Vielzahl von Aufnahmen auf ein einziges Empfangsmaterialblatt gedruckt werden soll.

## Revendications

1. Procédé d'impression d'une image comprenant les étapes :
fournir des données d'image numériques représentant une image graphique devant être imprimée sur une feuille sous la forme d'une copie papier,
fournir des instructions de découpage de la feuille comportant l'image graphique imprimée, et
employer les données d'image numériques et les instructions de découpage de la feuille pour imprimer l'image graphique sur la feuille comportant des instructions de découpage invisibles qui sont imprimées de manière à être incrustées dans l'image graphique imprimée, les instructions de découpage invisibles étant dispersées dans l'image graphique et n'étant pas nécessairement situées à des emplacements où le découpage doit être fait conformément aux instructions de découpage.

2. Procédé selon la revendication 1, dans lequel les instructions de découpage sont placées en une forme numérique qui est fusionnée avec des données d'image numériques traitées représentant l'image graphique à imprimer.

3. Procédé selon la revendication 1 ou 2, dans lequel les instructions de découpage représentent des données qui définissent le centre de l'image graphique et une représentation d'une figure ou de figures géométriques qui fournissent des informations se rapportant aux emplacements des points de découpage.

4. Procédé selon la revendication 3, dans lequel la représentation des figures géométriques se trouve virtuellement à l'intérieur de l'image graphique mais définit des emplacements de points de découpage externes à l'image graphique.

5. Procédé selon l'une quelconque des revendications 1, 2, 3 ou 4 et comprenant la détection des instructions de découpage invisibles incrustées et le positionnement automatique de l'image graphique par rapport à un mécanisme de découpage et le découpage de la feuille conformément aux instructions de découpage.

6. Procédé selon la revendication 4 et comprenant l'exécution d'un calcul relatif aux déplacements virtuels de points sur la figure géométrique depuis le centre de l'image et l'utilisation de ce calcul pour déterminer des emplacements de découpage à l'extérieur de l'image graphique et le découpage de la feuille conformément aux emplacements de découpage déterminés.

7. Procédé selon l'une quelconque des revendications 1 à 4 et comprenant le procédé consistant à :
former une image graphique ayant une bordure visible sur une feuille sous la forme d'une copie papier, et
former des informations de découpage invisibles à l'intérieur de l'image graphique, les informations de découpage étant présentes à l'intérieur de la bordure de l'image graphique et les informations de découpage représentant des informations de découpage de la feuille à des emplacements à l'extérieur de la bordure.

8. Procédé selon la revendication 1 ou 7 et dans lequel plusieurs images graphiques sont formées sur la feuille sous la forme d'une copie papier et au moins certaines images parmi les plusieurs images graphiques comprennent chacune des informations de découpage invisibles formées à l'intérieur d'une image graphique respective.

9. Image graphique imprimée formée sur une feuille imprimée à partir de données d'image numériques et comprenant des informations de découpage, l'image imprimée comportant :
des instructions incrustées réparties dans toute l'image graphique, qui sont invisibles pour un opérateur, les instructions incrustées définissant des emplacements de rognage au niveau d'un bord graphique, à l'intérieur du bord graphique, ou à l'extérieur du bord graphique pour chaque image graphique comprenant des images où plusieurs images doivent être imprimées sur une seule feuille de réception.
